# EUROPÄISCHE PATENTSCHRIFT

(11) **EP 3 161 339 B1**
(45) Veröffentlichungstag und Bekanntmachung des Hinweises auf die Patenterteilung: **15.08.2018**
(21) Anmeldenummer: 15745383.8
(22) Anmeldetag: 09.06.2015
(51) Int. Cl.: F16D 13/72, F16D 25/12, F16D 23/12, A01D 69/08, F16D 21/06

(54) **NASSE LAMELLENDOPPELKUPPLUNG MIT HEBELN AUSSERHALB DES NASSRAUMS**
WET DUAL MULTI-PLATE CLUTCH COMPRISING LEVERS OUTSIDE THE WET HOUSING
EMBRAYAGE DOUBLE MULTIDISQUES HUMIDE COMPORTANT DES LEVIERS À L'EXTÉRIEUR DE L'ESPACE HUMIDE

(30) Priorität: 27.06.2014 DE 102014212421
(43) Veröffentlichungstag der Anmeldung: 03.05.2017
(73) Patentinhaber: Schaeffler Technologies AG & Co. KG, 91074 Herzogenaurach (DE)
(72) Erfinder: FILSINGER, Andreas, 69151 Neckargemünd (DE); WEYDMANN, Patrick, 77815 Bühl (DE); GANDER, Gerhard, 77830 Bühlertal (DE); OBITZ, Alexander, 77815 Bühl (DE)
(86) Internationale Anmeldenummer: PCT/DE2015/200353
(87) Internationale Veröffentlichungsnummer: WO 2015/197063

(56) Entgegenhaltungen:
- EP-A2- 1 548 313
- WO-A1-2014/019584
- DE-A1- 2 314 226
- DE-A1-102006 040 506

## Beschreibung

Die Erfindung betrifft eine Doppelkupplung, insbesondere Lamellendoppelkupplung, zum Kuppeln einer Fahrantriebswelle eines Kraftfahrzeugmotors mit einer Getriebewelle eines Kraftfahrzeuggetriebes und/oder einer Nebenabtriebswelle eines Nebenabtriebs des Kraftfahrzeuges, insbesondere einer Zapfwelle, mit einer Fahrantriebskupplung zum Kuppeln des Kraftfahrzeugmotors mit der Getriebewelle, mit einer Nebenabtriebskupplung zum Kuppeln des Kraftfahrzeugmotors mit der Nebenabtriebswelle, wobei die Fahrantriebskupplung und die Nebenabtriebskupplung jeweils mittels einer separaten Hebelmechanik unabhängig voneinander zu betätigen sind.

Aus dem Stand der Technik sind trockene Doppelkupplungen bekannt, die außerhalb des Getriebes am Fahrzeug montiert werden/sind und mechanisch betätigt werden. Derartige konventionelle Doppelkupplungen weisen eine erste Kupplung für die Fahrbetrieb, die sogenannte Fahrkupplung oder Fahrwellenkupplung, und eine zweite Kupplung für einen Nebenantrieb, z.B. einen Zapfwellenantrieb, die sogenannte Nebenantriebskupplung oder Zapfwellenkupplung, auf. Es wird zwischen konventionellen Doppelkupplungen, bei denen die Fahrwellenkupplung und die Zapfwellenkupplung im unbetätigten Zustand geschlossen sind, und Sicherheitskupplungen (sogenannte Safety-PTO-Doppelkupplung), bei der die Fahrwellenkupplung im unbetätigten Zustand geschlossen ist und die Zapfwellenkupplung im unbetätigten Zustand offen ist, unterschieden.

Es ist von Nachteil, dass bei solchen bekannten trockenen Doppelkupplungen das maximale thermische Aufnahmevermögen der Kupplungen und die maximale thermische Belastbarkeit der Kupplungsbeläge in der Regel schnell erreichbar ist, insbesondere bei hohen zu übertragenden Drehmomenten. Eine Steigerung des übertragbaren Drehmoments ist bei gleicher Baugröße daher begrenzt. Im Grenzbelastungsbereich sind daher hoher Verschleiß der Reibbeläge und eine daraus resultierende Veränderung der Betriebspunkte bzw. Anpresskräfte die nachteilige Folge.

Zur vorstehend beschriebenen Problematik kommt hinzu, dass die durchschnittliche Leistungen von Doppelkupplungen verwendenden Kraftfahrzeugen, zum Beispiel Traktoren, und somit auch die Beanspruchungen der Kupplungen kontinuierlich steigen. Heutige Traktor-Doppelkupplungen befinden sich teilweise an ihrer Leistungsgrenze, vor allem was die thermische Beanspruchung betrifft.

Aus der WO 2006/084435 A1 ist bekannt ein Kupplungsaggregat mit einem an einem Schwungrad befestigbaren Gehäuse, in welchem zur Bildung einer ersten und einer zweiten Kupplung zwei gegenüber dem Gehäuse drehfeste, jedoch axial verlagerbare Anpressplatten aufgenommen sind, denen jeweils eine Kupplungsscheibe zugeordnet ist, wobei die Kupplungen unabhängig voneinander betätigbar sind mittels am Gehäuse verschwenkbar gelagerten Hebelanordnungen, wobei jeweils eine Hebelanordnung zum Öffnen und Schließen der entsprechenden Kupplung mit einer Anpressplatte gekoppelt ist, wobei die erste dem Schwungrad zugewandte Kupplung im nicht betätigten Zustand mittels einer zwischen ihrer Anpressplatte und dem Gehäuse verspannten Tellerfeder geschlossen ist, die axial zwischen den einander benachbarten Anpressplatten angeordnet ist, wohingegen die auf der dem Schwungrad abgewandten Seite der ersten Kupplung vorgesehene zweite Kupplung im unbetätigten Zustand geöffnet ist und durch eine auf ihre Hebelanordnung eingeleitete Kraft zwangsweise geschlossen wird, wobei die Hebelanordnung der zweiten Kupplung mit der zugeordneten Anpressplatte über axial wirkende Zugelemente gekoppelt ist und zwischen diesen Zugelementen und dieser Anpressplatte wenigstens ein Federelement verspannt ist, das bei geöffneter zweiter Reibungskupplung eine vorbestimmte Vorspannung aufweist und beim Schließen der zweiten Kupplung eine zusätzliche federnde Verformung erfährt.

Aus der DE 10 2012 207 244 A1 ist bekannt eine Kupplungsanordnung zur Verwendung im Antriebsstrang eines Traktors umfassend eine Fahrkupplung und eine Nebenantriebskupplung, wobei die Fahrkupplung zwischen einem Verbrennungsmotor und einer Getriebeeingangswelle und die Nebenantriebskupplung zwischen dem Verbrennungsmotor und einem Nebenantrieb angeordnet sind, wobei die Kupplungsanordnung ein Kupplungsgehäuse umfasst, das ein Blechumformteil umfasst.

Aus der DE 10 2013 214 966 A1 ist bekannt eine Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, mit einer ersten Reibungskupplung zum reibschlüssigen Verpressen einer mit der Getriebewelle koppelbaren ersten Kupplungsscheibe zwischen einer ersten Anpressplatte und einer ersten Gegenplatte, wobei die erste Anpressplatte zum Schließen der ersten Reibungskupplung in eine Axialrichtung verlagerbar ist, einer zweite Reibungskupplung zum reibschlüssigen Verpressen einer mit dem Nebenabtrieb koppelbaren zweiten Kupplungsscheibe zwischen einer zweiten Anpressplatte und einer zweiten Gegenplatte, wobei die zweite Anpressplatte zum Schließen der zweiten Reibungskupplung in die Axialrichtung verlagerbar ist, einem ersten Betätigungselement zum Verlagern der ersten Anpressplatte, einem zweiten Betätigungselement zum Verlagern der zweiten Anpressplatte, wobei die zweite Anpressplatte mit einem mit dem zweiten Betätigungselement wirkverbundenen Druckring zur Übertragung der Verlagerungsbewegung verbunden ist, wobei zwischen dem zweiten Betätigungselement und dem Druckring ein vorgespannter Druckkraftspeicher angeordnet ist.

Aus der DE 10 2013 215 079 A1 ist bekannt eine Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, mit einer ersten Reibungskupplung zum reibschlüssigen Verpressen einer mit der Getriebewelle koppelbaren ersten Kupplungsscheibe zwischen einer ersten Anpressplatte und einer ersten Gegenplatte, wobei die erste Anpressplatte zum Schließen der ersten Reibungskupplung in eine Axialrichtung verlagerbar ist, einer zweite Reibungskupplung zum reibschlüssigen Verpressen einer mit dem Nebenabtrieb koppelbaren zweiten Kupplungsscheibe zwischen einer zweiten Anpressplatte und einer zweiten Gegenplatte, wobei die zweite Anpressplatte zum Schließen der zweiten Reibungskupplung in die Axialrichtung verlagerbar ist, einem ersten Betätigungselement zum Verlagern der ersten Anpressplatte, einem zweiten Betätigungselement zum Verlagern der zweiten Anpressplatte, wobei die zweite Anpressplatte mit einem mit dem zweiten Betätigungselement wirkverbundenen Druckring zur Übertragung der Verlagerungsbewegung verbunden ist, wobei das zweite Betätigungselemente mindestens ein Federelement zum Vorspannen aufweist, wobei das mindestens eine Federelement zwischen dem zweiten Betätigungselement und dem Druckring angeordnet ist.

Ausgehend von dem vorgenannten Stand der Technik ist Aufgabe der vorliegenden Erfindung, eine Doppelkupplung zu entwickeln, die bei gleichem oder nur geringfügig größerem Bauraum, mehr Reibwärme aufnehmen bzw. abführen kann und zudem eine einfache Erweiterung des maximalen Drehmomentes bietet. Die Doppelkupplung soll in der Lage sein, bekannte Doppelkupplungen mit geringstmöglichem Änderungsaufwand für den Kunden zu ersetzen ("Plug in"-Lösung).

Diese Aufgabe wird bei einer gattungsgemäßen Kupplung erfindungsgemäß dadurch gelöst, dass die Doppelkupplung ein Nassraumgehäuse aufweist, in dem die Fahrantriebskupplung und die Nebenabtriebskupplung fluiddicht aufgenommen sind, wobei die jeweilige Hebelmechanik für die Fahrantriebskupplung und die Nebenabtriebskupplung außerhalb des Nassraumgehäuses angeordnet ist. Die erfindungsgemäße Doppelkupplung ist vorzugsweise als Lamellendoppelkupplung ausgebildet. Unter einem Nassraumgehäuse wird ein Gehäuse verstanden, dass unter Nutzung von Dichtungen oder aus sich selbst heraus zum Schaffen eines schmiermittelbeinhaltenden und nach außen dichten / abgegrenzten Raum in der Lage ist. Es ist ein besonderer Vorteil der Erfindung, dass eine übliche, vorhandene Doppelkupplung, z.B. eine Trockendoppelkuppung, mit nur geringem Änderungsaufwand für den Kunden gegen eine Naßdoppelkupplung nach der Erfindung ausgetauscht werden kann. Die erfindungsgemäße Doppelkupplung wird über die außerhalb des Nassraumgehäuses angeordnete Hebelmechanik betätigt. Die Kupplungsreibeinrichtungen sowohl der Fahrantriebskupplung als auch der Nebenabtriebskupplung befinden sich in einem abgedichteten Bereich, dem sogenannten Nassraum, der vom Nassraumgehäuse umgeben und fluiddicht abgedichtet wird. Die Doppelkupplung kann daher in vorteilhafter Weise als Nasskupplung ausgeführt und genutzt werden, so dass bei gleichem oder nur geringfügig größerem Bauraum im Vergleich zu bekannten gattungsgemäßen Doppelkupplungen eine hohe Reibwärmemenge aufgenommen und abgeführt werden kann. Zudem ist die erfindungsgemäße Doppelkupplung besonders gut zur Übertragung hoher maximaler Drehmomente geeignet.

Die Fahrantriebkupplung und die Nebenabtriebskupplung sind unabhängig voneinander zu betätigen, insbesondere zeitgleich einrückbar. Damit ist die erfindungsgemäße Kupplung besonders für einen Einsatz in Landmaschinen wie Traktoren geeignet.

Vorteilhafte Ausführungsformen der Erfindung sind in den Unteransprüchen beansprucht und werden nachfolgend näher erläutert.

Nach einer Ausführungsform kann die Doppelkupplung ein die Hebelmechaniken tragendes Kupplungsgehäuse aufweisen. Ein mit der Fahrantriebswelle gekoppelter Fahrkupplungsreibbelag kann zwischen einer ersten Anpressplatte und dem Kupplungsgehäuse verpressbar angeordnet sein. Ein mit der Nebenabtriebswelle gekoppelter Nebenabtriebsreibbelag kann zwischen einer zweiten Anpressplatte und dem Kupplungsgehäuse verpressbar angeordnet sein.

Die erste Anpressplatte und die zweite Anpressplatte können zum Schließen der Fahrkupplung bzw. der Nebenabtriebskupplung mittels der jeweiligen Hebelmechanik jeweils in Axialrichtung mittelbar oder unmittelbar wirkverbunden und verlagerbar sein, insbesondere unabhängig voneinander verlagerbar sein. Die Reibbeläge können insbesondere als Lamellenpakete ausgebildet sein.

Das Nassraumgehäuse liegt vorzugsweise über eine Dichtung, vorzugsweise eine Labyrinthdichtung, an dem Kupplungsgehäuse an und ist gegenüber dem Kupplungsgehäuse abgedichtet.

Bei einer Ausführungsform kann das Nassraumgehäuse eine erste Nassraumgehäusehälfte mit einem ersten Gehäuseteil und einem zweiten Gehäuseteil aufweisen. Diese sind in vorteilhafter Weise fluiddicht miteinander verbunden, insbesondere miteinander verschweißt, z.B. mittels einer Laserschweißnaht. Zwischen den beiden Gehäuseteilen kann Gehäusedichtung angeordnet sein. Bei einer Form der Erfindung liegt die erste Nassraumgehäusehälfte über die Dichtung oder Labyrinthdichtung an dem Kupplungsgehäuse an und ist gegenüber dem Kupplungsgehäuse abgedichtet. Es ist von besonderem Vorteil, wenn ein Gehäuseteil oder mehrere Gehäuseteile oder alle Gehäuseteile Blechformteile ist bzw. sind, insbesondere Tiefziehteile.

Bei einer Ausführungsform weist das Nassraumgehäuse eine zweite Nassraumgehäusehälfte auf. Diese kann fest mit dem Kupplungsgehäuse verbunden, insbesondere verschweißt sein. Sie kann insbesondere an der Fahrantriebswelle und/oder der Abtriebswelle in dichtender Anlage stehen, insbesondere mittels eines Simmerings.

Es ist von besonderem Vorteil, wenn das Nassraumgehäuse bzw. die erste Nassraumgehäusehälfte einen Flansch zur Fixierung am Kraftfahrzeug, vorzugsweise an einem Getriebegehäuse, aufweist, insbesondere zur drehfesten Fixierung. Dadurch kann die Kupplung besonders einfach am Fahrzeug angeordnet und befestigt werden und eignet sich gut für einen Austausch einer bereits vorhandenen Kupplung.

Das Nassraumgehäuse bzw. die erste Nassraumgehäusehälfte kann bei einer Ausführungsform einen Lagersitz ausbildet, insbesondere für ein das Kupplungsgehäuse gegenüber dem Nassraumgehäuse rotierbar lagerndes Wälzlager. Eine solche Anordnung ist montagefreundlich. Bei dem Wälzlager handelt es sich vorzugsweise um ein gedichtetes Lager, so dass weitere Maßnahmen zur Abdichtung des Nassraums an dieser Stelle nicht erforderlich sind.

Vorzugsweise weist das Nassraumgehäuse einen Kühlmitteleinlass, insbesondere einen Kühlöleinlass, und zusätzlich oder alternativ einen an seiner Unterseite angeordneten Kühlmittelauslass (Kühlölauslass) auf. Auf diese Weise ist der vom Nassraumgehäuse umgebene Innenraum oder Nassraum, in dem die Fahrantriebskupplung und die Nebenabtriebskupplung mit der jeweils entsprechenden Betätigungsmechanik aufgenommen sind, besonders einfach mit Kühlmittel zu spülen. Über die Anschlüsse kann beispielsweise Kühlöl von einem Ölreservoir, z.B. Getriebeöl aus dem Getriebe, in den Nassraum eingeleitet und aus diesem über den Ablauf wieder in den Ölsumpf des Getriebes zurückgeführt werden. Für eine möglichst effektive Rückführung von Öl aus dem Nassraumgehäuse ist es von Vorteil, wenn eine Kühlmittelrinne zum Sammeln des Kühlmittels vorgesehen ist. Anstelle eines Kühlmitteleinlasses im Nassraumgehäuse kann Kühlmittel über die Fahrantriebswelle und/oder die Nebenabtriebswelle und/oder einen Spalt zwischen diesen in das Nassraumgehäuse eingeleitet werden.

Bei einer Ausführungsform weist das Kupplungsgehäuse eine Durchführung auf. In dieser ist die erste Anpressplatte oder die zweite Anpressplatte oder ein mit der ersten oder der zweiten Anpressplatte verbundenes Übertragungsglied zwischen der Hebelmechanik und der jeweiligen Anpressplatte in Axialrichtung lagepositionierbar aufgenommen. Die Durchführung ist vorzugsweise mittels einer O-dichtung abgedichtet.

Alternativ oder zusätzlich kann das Nassraumgehäuse eine Durchführung aufweisen, durch die ein zusätzliches Fahrantriebskupplungsgehäuse oder ein zusätzliches Nebenabtriebskupplungsgehäuse aus dem Nassraumgehäuse nach außen geführt ist. Dieses wirkt als Anpressplatte und trägt darüber hinaus einen Reibbelag oder ein Reibbelagpaket in radialer Richtung. Diese Durchführung ist vorzugsweise mittels O-Dichtringen abgedichtet.

Das Nassraumgehäuse bzw. die zweite Nassraumgehäusehälfte kann bei einer Form der Erfindung gegenüber der Fahrantriebswelle und/oder der Nebenabtriebswelle mittels eines Simmerings abgedichtet sein. Dadurch wird eine besonders effektive und kostengünstige Abdichtung des vom Nassraumgehäuse umgebenen Nassraums bewirkt.

Die Fahrantriebskupplung kann bei einer Ausführungsform einen mit der Fahrantriebswelle drehfest verbundenen Lamellenträger und die Nebenabtriebskupplung einen mit der der Nebenabtriebswelle drehfest verbunden Lamellenträger aufweisen.

Die Fahrantriebskupplung kann einen Lamellenträger aufweisen. Dieser ist drehfest auf der Fahrantriebswelle angeordnet, z.B. mittels einer Verzahnung. Die Nebenabtriebskupplung kann gleichfalls einen Lamellenträger aufweisen. Dieser ist drehfest auf der Nebenabtriebswelle angeordnet, z.B. mittels einer Verzahnung. Der oder die Lamellenträger kann ein Blechformteil, z.B. Tiefziehbauteil, sein und trägt den Reibbelag, beispielsweise an einem äußeren Randabschnitt.

Das Kupplungsgehäuse der Doppelkupplung kann im Wesentlichen gebildet sein aus einer Kupplungsgrundplatte, auch als Kupplungsgehäuse bezeichnet, und einem Grundplattenträger, die jeweils als im Wesentlichen glockenförmiges Blechformteil, z.B. als Tiefziehbauteil, ausgebildet sind. Kupplungsgrundplatte und Grundplattenträger können miteinander verschweißt sein. An der Kupplungsgrundplatte kann eine Mehrzahl an Hebelaufnahmen, auch als Hebellagerböcke bezeichnet, angeordnet sein, z.B. mittels Nieten. Jede Hebelaufnahme dient der schwenkbaren Aufnahme eines Betätigungshebels für eine der Kupplungen.

Das Kupplungsgehäuse bzw. insbesondere der Grundplattenträger kann über eine Verzahnung mit einer Bogenfederdämpfereinheit in Verbindung stehen und mit dieser rotatorisch gekoppelt sein. Letztere kann mit einem Schwungrad verbunden sein, das wiederum mit dem Antrieb verbunden ist. Es ist von besonderem Vorteil, wenn das Kupplungsgehäuse, insbesondere der Grundplattenträger mittels einer Gleitlagereinheit oder ähnlichen Lagerung in axialer Richtung abgestützt ist, insbesondere am Schwungrad. Auf diese Weise können Relativbewegungen zwischen Schwungrad und Kupplungsgehäuse bzw. Grundplattenträger aufgefangen werden. Eine der Wellen, Nebenabtriebswelle oder Fahrantriebswelle, kann mittels eines Wälzlagers am Schwungrad gelagert sein.

Der Reibbelag der Nebenabtriebskupplung kann zwischen dem Kupplungsgehäuse, insbesondere der Kupplungsgrundplatte, und dem Lamellenträger angeordnet sein. Seine Lamellen sind in axialer Richtung positionierbar und können mittels der Anpressplatte zwischen dieser und dem Kupplungsgehäuse, insbesondere dem Grundplattenträger, in axialer Richtung zusammengepresst werden. Der Reibbelag der Fahrantriebskupplung kann radial innerhalb des Lamellenträgers zwischen diesem und einem Fahrkupplungsgehäuse angeordnet. Seine Lamellen sind in axialer Richtung positionierbar und können mittels der Anpressplatte zwischen dieser und dem Fahrkupplungsgehäuse in axialer Richtung zusammengepresst werden.

Die Hebelmechanik für die Nebenantriebskupplung kann einen Betätigungshebel mit aufweisen, der um eine Schwenkachse verschwenkbar und ist mittels einer Feder vorgespannt ist. Er kann einen Zapfen tragen, an dem ein Betätigungsmittel, z.B. eine Augenschraube, schwenkbar angeordnet ist. Das Betätigungsmittel ist mit der Anpressplatte in axialer Richtung wirkverbunden. Anpressplatte und Betätigungsmittel sind vorzugsweise in axialer Richtung zueinander einstellbar lagefixiert. Der Betätigungshebel kann mit einem Stellring in Anlage stehen. Dieser ist vorzugsweise mittels einer Wälzlagerung gegenüber einem Stellstift gelagert, so dass eine Relativrotation zwischen Stellring und Stellstift möglich ist und Positionsänderungen des Stellstifts in axialer Richtung auf den Stellring übertragen werden.

Alternativ kann der Betätigungshebel mit einem in axialer Richtung verlaufenden Durchgangsloch versehen sein, in das eine Stellschraube eingeschraubt ist. Diese kann den Betätigungshebel in axialer Richtung durchgreifen und mit einem Fahrkupplungsgehäuse in Anlage stehen. Über ein Verstellen der Stellschraube relativ zum Betätigungshebel kann die Kupplung eingestellt werden. Das Fahrkupplungsgehäuse kann als Anpressplatte wirken und insbesondere einen Kragen aufweisen, der auf der vom Betätigungshebel in axialer Richtung abgewandten Seite des Lamellenpakets angeordnet ist und dieses bei einer Betätigung über den Betätigungshebel in axialer Richtung gegen das Kupplungsgehäuse bzw. die Kupplungsgrundplatte presst.

Zwischen dem Fahrkupplungsgehäuse und der Anpressplatte (einem Anpressplattenteil oder / einer Kupplungsgrundplatte) der Nebenantriebskupplung ist in vorteilhafter Weise eine Kraftspeichereinheit, z.B. eine Tellerfeder, angeordnet. Man kann auch sagen, dass Anpressplatte und Fahrkupplungsgehäuse mittels der Tellerfeder in axialer Richtung gegeneinander verspannt sind.

Anders und zusammenfassend ausgedrückt verfügt die erfindungsgemäße Doppelkupplung, die zum Beispiel eine Traktordoppelkupplung sein kann, über zwei Kupplungen, eine für den Fahrantrieb und eine für den Nebenabtrieb (Zapfwelle). Jede der beiden Kupplungen wird über ein am Fahrzeug vorhandenes Ausrücksystem betätigt. Dieses setzt die Hebelmechanik der jeweiligen Kupplung in Bewegung, was zu einem Öffnen bzw. Schließen der Reibeinrichtung führt. Die Kupplungen können insbesondere zeitgleich betätigt werden und zeitgleich eingerückt sein. Eine Steigerung des Drehmomentes kann durch Hinzufügen von weiteren Reib- und Stahllamellen ermöglicht werden. Der Bauraum bleibt dabei nahezu gleich. Teile der Doppelkupplung befinden sich in einer gedichteten Kapsel (Nachraumgehäuse), die drehfest mit einer Getriebeglocke des Kraftfahrzeugs verbunden ist. Daran befestigt ist ein Anschluss, der als Abfluss dient und sich an der Unterseite der Kapsel befindet, um Öl zurück zum Ölsumpf des Getriebes zu führen. Die Zuführung des Kühlöls kann über einen gesonderten Anschluss in der Kapsel oder über eine als Hohlwelle ausgebildete Getriebeeingangswelle oder über einen Spalt zwischen einer Vollwelle und einer Hohlwelle als Getriebeeingangswellen erfolgen. Durch eine Verwendung eines Bogenfederdämpfers können Fahrkupplung und Zapfwellenkupplung gedämpft werden. Das Reibsystem kann in vorteilhafter Weise einem Ölvolumenstrom ausgesetzt sein oder werden, dessen Aufgabe ist, entstandene Reibwärme von der Kupplung wegzuführen. Des Weiteren ergibt sich eine höhere Lebensdauer des Reibsystems.

Die Hebelmechanik befindet sich nach der Erfindung außerhalb der Nassraumkapsel. Die Reibbeläge oder Lamellenpakete mit Lamellenträgern befinden sich im Nassraum. Dabei trägt das Kupplungsgehäuse, insbesondere die Kupplungsgrundplatte grundlegend zur Abdichtung des Nassraums bei. Zwischen der Kupplungsgrundplatte und der Nassraumkapsel befindet sich eine große Dichtung, insbesondere eine Labyrinthdichtung, welche den Nassraum von der Umgebung abdichtet.

Die erfindungsgemäße nasse Doppelkupplung, die insbesondere als Traktor-Doppelkupplung ausgeführt sein kann, bietet im Vergleich zu bekannten trockenen Systemen mehrere Vorteile. Durch Ölkühlung kann Wärme effektiv abgeführt werden, wodurch ein Betrieb mit höherer Lebensdauer, auch unter hohen Belastungen, gewährleistet ist. Durch geringe Reibung an den Reibflächen verschleißen die Reibbeläge nur gering. Drehmomentsteigerungen können einfach und nahezu bauraumneutral über die Anzahl der Reibbeläge angepasst werden. Ein bislang am Kraftfahrzeug genutztes oder verbautes Ausrücksystem zum Betätigen der Kupplung kann unverändert übernommen werden. Insgesamt sind nur sehr geringe Änderungen am Fahrzeug durchzuführen.

Die Erfindung wird nachfolgend mit mehreren Ausführungsbeispielen anhand von einer Zeichnung näher erläutert. Dabei zeigen:
- Fig. 1: eine schematische Schnittdarstellung einer erfindungsgemäßen Doppelkupplung mit einer Fahrwellenkupplung und einer Zapfwellenkupplung,
- Fig. 2: die Zapfwellenkupplung der Fig. 1 in einem vergrößerten Ausschnitt,

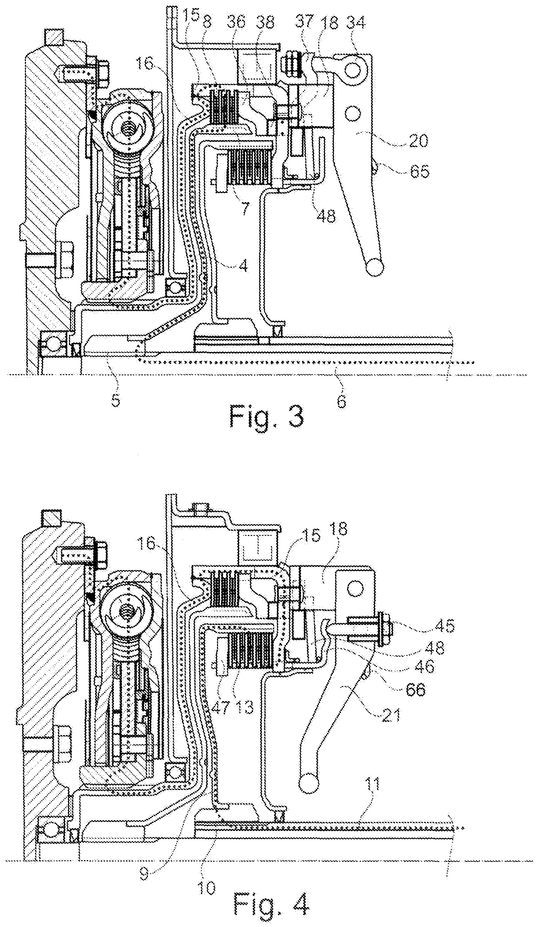

- Fig. 3: den Momentenfluss in der Zapfwellenkupplung der Doppelkupplung der Fig. 1,
- Fig. 4: den Momentenfluss in der Fahrwellenkupplung der Doppelkupplung der Fig. 1,
- Fig. 5: eine Prinzipskizze zu Kupplungskräften im unbetätigten Zustand,
- Fig. 6: eine Prinzipskizze zur Betätigung der Zapfwellenkupplung,
- Fig. 7: eine Prinzipskizze zur Betätigung der Fahrwellenkupplung,
- Fign. 8A, 8B: Prinzipskizzen zum Kühlölfluss in der Kupplung,
- Fig. 9: ein vergrößertes Detail zu axialen Abstützung der Doppelkupplung der Fig. 1,
- Fig. 10: eine schematische Darstellung zur Montage der Doppelkupplung der Fig. 1 an einem Fahrzeug,
- Fig. 11: eine perspektivische teilgeschnittene Ansicht einer Gehäusedichtung der Doppelkupplung der Fig. 1, und
- Fig. 12: Prinzipskizzen zur Funktion der Gehäusedichtung der Fig. 11.

Die Figuren sind lediglich schematischer Natur und dienen nur dem Verständnis der Erfindung. Die gleichen Elemente sind mit denselben Bezugszeichen versehen. Details der unterschiedlichen Ausführungsformen können miteinander kombiniert werden.

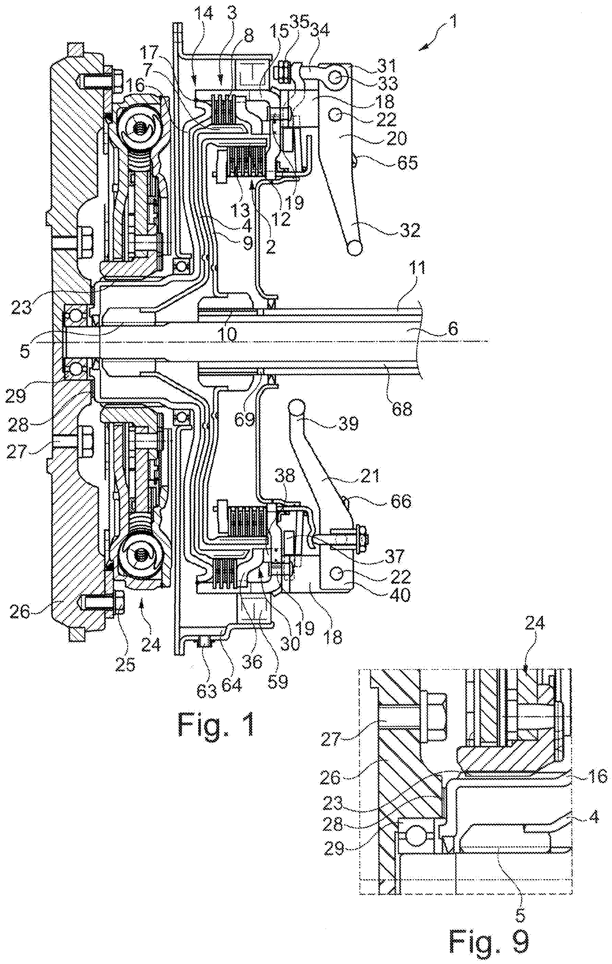

Figur 1 zeigt eine Doppelkupplung 1 nach der Erfindung. Diese weist eine erste Kupplungseinheit 2, im vorliegenden Ausführungsbeispiel eine Fahrwellenkupplung 2, und eine zweite Kupplungseinheit 3, im vorliegenden Ausführungsbeispiel eine Zapfwellenkupplung 3, auf. Die Doppelkupplung 1 ist als Nasskupplung ausgebildet.

Die Zapfwellenkupplung 3 weist einen Lamellenträger 4 auf, der mittels einer Zapfwellenverzahnung 5 drehfest auf einer Zapfwelle 6 angeordnet ist. Der Lamellenträger 4 ist ein im Wesentlichen glockenförmiges Blechformteil, z.B. Tiefziehbauteil, und trägt auf der Außenseite seines radial äußeren Randabschnitts 7 ein Lamellenpaket 8.

Die Fahrwellenkupplung 2 weist einen Lamellenträger 9 auf, der mittels einer Fahrwellenverzahnung 10 drehfest auf einer Fahrwelle 11 angeordnet ist. Der Lamellenträger 9 ist ein im Wesentlichen glockenförmiges Blechformteil, z.B. Tiefziehbauteil, und trägt auf der Innenseite seines radial äußeren Randabschnitts 12 ein Lamellenpaket 13.

Die Doppelkupplung 1 weist des Weiteren ein Kupplungsgehäuse 14 auf. Dieses ist im Wesentlichen gebildet aus einer Kupplungsgrundplatte 15, auch als Zapfkupplungsgehäuse 15 bezeichnet, und einem Grundplattenträger 16, die jeweils als im Wesentlichen glockenförmiges Blechformteil, z.B. als Tiefziehbauteil, ausgebildet sind. Die Kupplungsgrundplatte 15 und der Grundplattenträger 16 sind mittels einer in Umfangsrichtung verlaufenden Schweißnaht 17 miteinander verschweißt. An der Kupplungsgrundplatte 15 ist eine Mehrzahl an Hebelaufnahmen 18, auch als Hebellagerböcke 18 bezeichnet, mittels Nieten 19 angeordnet. Jede Hebelaufnahme 18 dient der schwenkbaren Aufnahme eines Betätigungshebels 20 für die Zapfwellenkupplung 3 bzw. eines Betätigungshebels 21 für die Fahrwellenkupplung 2, jeweils um eine in der Hebelaufnahme 18 angeordnete Schwenkachse 22.

Der Grundplattenträger 16 steht über eine Verzahnung 23 mit einer Bogenfederdämpfereinheit 24 in Verbindung und ist über diese rotatorisch mit der Bogenfederdämpfereinheit 24 gekoppelt. Letztere ist mittels Verschraubungen 25 an ein Schwungrad 26 geflanscht, das wiederum über Verschraubungen 27 mit einem nicht dargestellten Antrieb, z.B. einer Verbrennungskraftmaschine, verbunden ist. Wie insbesondere in Fig. 9 gezeigt ist, ist der Grundplattenträger 16 mittels einer Gleitlagereinheit 28 in axialer Richtung am Schwungrad 26 abgestützt. Die Gleitlagereinheit 28 dient dazu, Relativbewegungen zwischen Schwungrad 26 und dem drehfest an der Bogenfederdämpfereinheit 24 angeordneten Grundplattenträger 16 zu ermöglichen. Im Schwungrad 26 ist des Weiteren die Zapfwelle 6 mittels eines Wälzlagers 29 gelagert. Im Ergebnis rotiert der Grundplattenträger 16 und damit auch die Kupplungsgrundplatte 15 abgesehen von Drehzahlschwankungen aufgrund einer mittels der Bogenfederdämpfereinheit 24 hervorgerufenen Dämpfung mit der Antriebsdrehzahl Nₐₙ.

Das Lamellenpaket 8 der Zapfwellenkupplung 3 ist zwischen der Kupplungsgrundplatte 15 und dem Lamellenträger 4 angeordnet. Seine Lamellen sind in axialer Richtung positionierbar und können mittels einer Anpressplatte 30 zwischen dieser und dem Grundplattenträger 16 in axialer Richtung zusammengepresst werden, so dass Drehmoment von dem Schwungrad 26 über die Bogenfederdämpfereinheit 24, die Verzahnung 23, den Grundplattenträger 16, die Kupplungsgrundplatte 15, das Lamellenpaket 8, den Lamellenträger 4 und die Zapfwellenverzahnung 5 auf die Zapfwelle 6 übertragen wird.

Das Lamellenpaket 13 der Fahrwellenkupplung 2 ist radial innerhalb des Lamellenträgers 9 zwischen diesem und einem Fahrkupplungsgehäuse 46 angeordnet. Seine Lamellen sind in axialer Richtung positionierbar und können mittels des Fahrkupplungsgehäuses 46 zwischen diesem und der Kupplungsgrundplatte 15 zusammengepresst werden, so dass Drehmoment von dem Schwungrad 26 über die Bogenfederdämpfereinheit 24, die Verzahnung 23, den Grundplattenträger 16, die Kupplungsgrundplatte 15, das Lamellenpaket 13, den Lamellenträger 9 und die Fahrwellenverzahnung 10 auf die Fahrwelle 11 übertragen wird.

Die Anpressplatte 30 besteht im Wesentlichen aus einem inneren Anpressplattenteil 36 und einem äußeren Anpressplattenteil 37. Das innere Anpressplattenteil 36 ist auf der dem Lamellenpaket 8 zugewandten Seite (innere Seite oder Nassseite der Kupplung) der Kupplungsgrundplatte 15 angeordnet. Das äußere Anpressplattenteil 37 ist auf der vom Lamellenpaket 8 abgewandten Seite (äußere Seite oder Trockenseite der Kupplung) der Kupplungsgrundplatte 15 angeordnet. Das innere Anpressplattenteil 36 und das äußere Anpressplattenteil 37 sind mittels eines Schiebezylinders 38 miteinander verbunden, der ein in der Kupplungsgrundplatte 15 in axialer Richtung ausgebildetes Durchgangsloch durchgreift. Der Schiebezylinder 38 ist mittels eines O-Dichtrings gegenüber der Kupplungsgrundplatte 15 abgedichtet und in dem Durchgangsloch in der Kupplungsgrundplatte 15 relativ zu dieser in axialer Richtung verschiebbar.

Der Betätigungshebel 20 für die Zapfwellenkupplung 3 weist ein in radialer Richtung außerhalb der Schwenkachse 22 ausgebildetes äußeres Hebelende 31 und ein in radialer Richtung innerhalb der Schwenkachse 22 ausgebildetes inneres Hebelende 32 auf und ist mittels einer Schenkelfeder 65 vorgespannt. Das äußere Hebelende 31 trägt einen Zapfen 33, an dem eine Augenschraube 34 mittels ihres Auges um den Zapfen 33 schwenkbar angeordnet ist. Das dem Auge gegenüberliegende mit einem Gewinde versehene Ende der Augenschraube 34 durchgreift ein in dem äußeren Anpressplattenteil 37 vorgesehenes Loch in axialer Richtung. Das äußere Anpressplattenteil 37 und die Augenschraube 34 sind mittels einer Kontermutterverschraubung 35 in axialer Richtung zueinander lagefixiert und einstellbar, so dass die Zapfwellenkupplung 3 über die Kontermutterverschraubung 35 eingestellt werden kann. Das innere Hebelende 32 wirkt mit einer üblichen und in den Figuren nicht dargestellten Ausrückereinheit zusammen und kann über diese in axialer Richtung verstellt werden.

Der Betätigungshebel 21 für die Fahrwellenkupplung 2 weist ein in radialer Richtung innerhalb der Schwenkachse 22 ausgebildetes inneres Hebelende 39 auf und ist mittels einer Schenkelfeder 66 vorgespannt. Das äußere Hebelende 40 des Betätigungshebels 22 ist mit einem Loch in axialer Richtung versehen, das von der Schwenkachse 22 durchgriffen ist. Das innere Hebelende 39 wirkt mit einer in den Figuren nicht dargestellten Ausrückereinheit zusammen und kann mittels dieser in axialer Richtung betätigt werden. Radial innerhalb der Schwenkachse 22 ist der Betätigungshebel 21 mit einem in axialer Richtung verlaufenden Durchgangsloch 44 versehen. In dieses ist eine Stellschraube 45 eingeschraubt, die den Betätigungshebel 21 in axialer Richtung durchgreift und mit dem Fahrkupplungsgehäuse 46 in Anlage steht. Über ein Verstellen der Stellschraube 45 relativ zum Betätigungshebel 21 kann die Fahrwellenkupplung 2 eingestellt werden. Das Fahrkupplungsgehäuse 46 weist einen Kragen 47 auf, der auf der vom Betätigungshebel 21 in axialer Richtung abgewandten Seite des Lamellenpakets 13 angeordnet ist und dieses bei einer Betätigung über den Betätigungshebel 21 in axialer Richtung gegen die Kupplungsgrundplatte 16 presst.

Zwischen dem Fahrkupplungsgehäuse 46 und dem äußeren Anpressplattenteil 37 ist eine Tellerfeder 48 angeordnet. Die radial innere Seite der Tellerfeder 48 liegt unter Zwischenlage eines Metallrings 49 am Fahrkupplungsgehäuse 46 an. Die radial äußere Seite der Tellerfeder 48 liegt mit dem äußeren Anpressplattenteil 37 in Anlage. Man kann auch sagen, dass der äußere Anpressplattenteil 37 und das Fahrkupplungsgehäuse 46 mittels der Tellerfeder 48 in axialer Richtung gegeneinander verspannt sind.

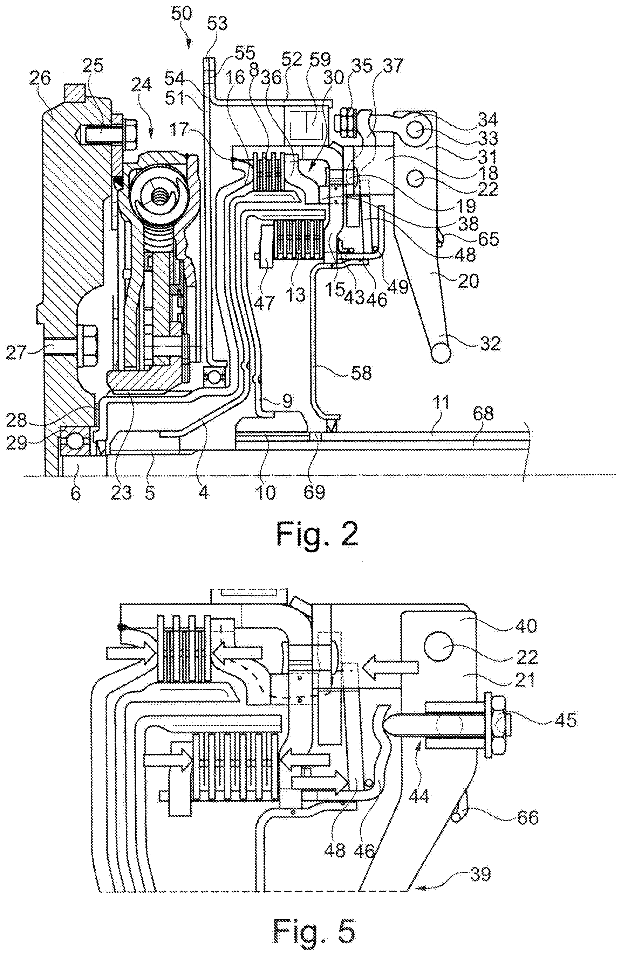

Die Fahrwellenkupplung 2 und die Zapfwellenkupplung 3 sind unabhängig voneinander betätigbar. Im unbetätigten Zustand sind die Zapfwellenkupplung 3 wie auch die Fahrwellenkupplung 2 geschlossen (normally closed). Die zum Schließen der Kupplungen 2, 3 und Gegeneinanderpressen der Lamellenpakete 8, 13 erforderliche Druckkraft wird durch die Tellerfeder 48 erzeugt. Der unbetätigte Zustand ist in Fig. 5 gezeigt.

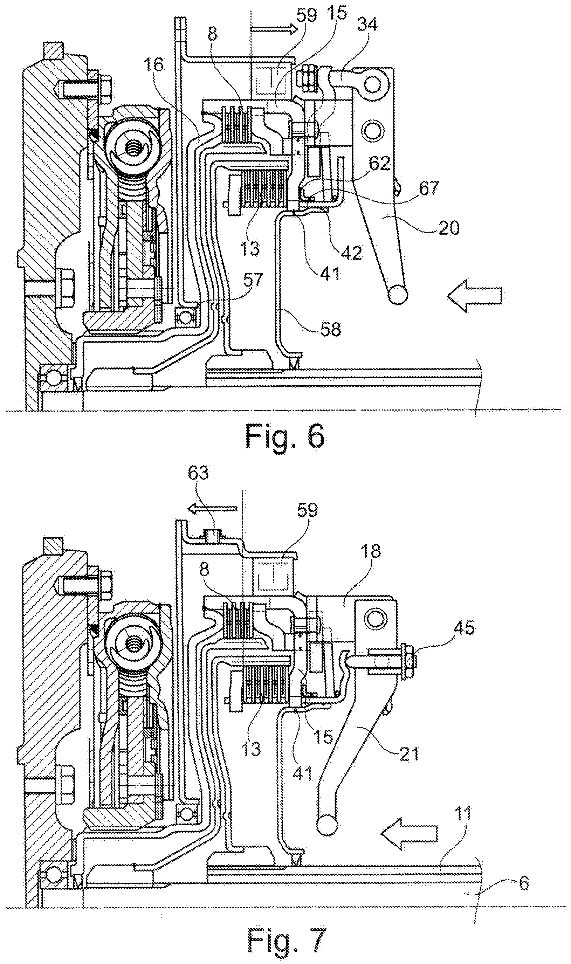

Die Beschreibung der Betätigung der Zapfwellenkupplung 3 erfolgt mit Bezug auf Fig. 6. Gegenüber dem unbetätigten Zustand wird der Betätigungshebel 20 mittels der in den Figuren nicht dargestellten Ausrückereinheit um die Schwenkachse 22 mit dem Uhrzeigersinn geschwenkt. Das äußere Hebelende 31 bewegt sich unter Mitnahme der Augenschraube 34 in axialer Richtung fort vom Schwungrad 26. Es kommt zu einer Verlagerung des äußeren Anpressplattenteils 37 zusammen mit dem Schiebezylinder 38 und dem inneren Anpressplattenteil 36 fort vom Lamellenpaket 8 gegen die Tellerfeder 48, so dass dieses nicht mehr zwischen Anpressplatte 30 und Grundplattenträger 16 eingespannt ist und die Zapfwellenkupplung 3 öffnet.

Die Beschreibung der Betätigung der Fahrwellenkupplung 2 erfolgt mit Bezug auf Fig. 7. Gegenüber dem unbetätigten Zustand wird der Betätigungshebels 21 mittels der in den Figuren nicht dargestellten Ausrückereinheit um die Schwenkachse 22 gegen den Uhrzeigersinn verschwenkt. Das Verschwenken des Betätigungshebels 21 bewirkt eine Verschiebung der Stellschraube 45 in Richtung des Schwungrads 26. Es kommt zu einer Verlagerung des Fahrkupplungsgehäuses 46 mit dem Kragen 47 gegen die Tellerfeder 48 in Richtung des Schwungrads 26 fort vom Lamellenpaket 13, so dass dieses nicht mehr zwischen dem Kragen 47 und der Kupplungsgrundplatte 15 eingespannt ist und die Fahrwellenkupplung 2 öffnet.

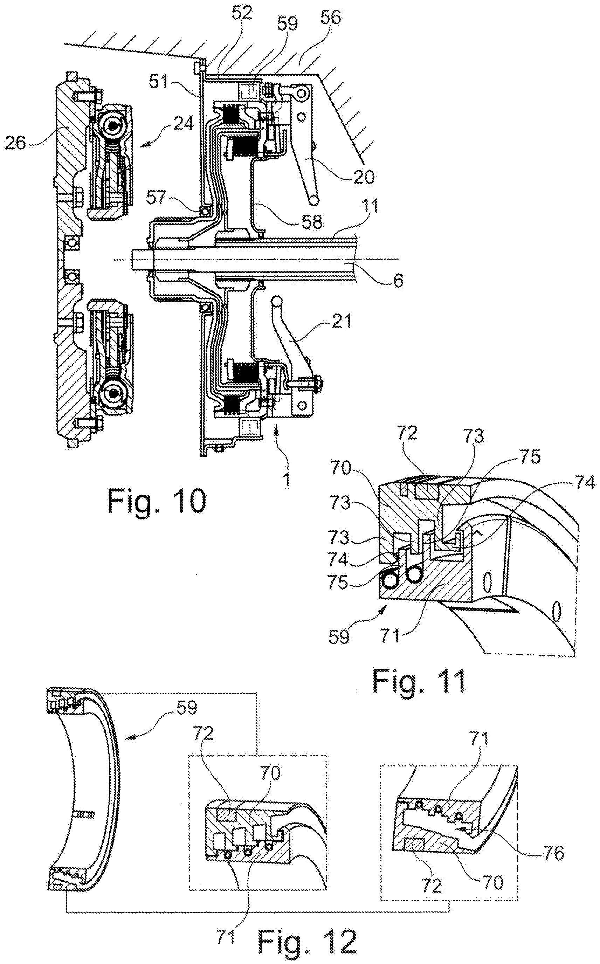

Die erfindungsgemäße Doppelkupplung 1 ist als Nasskupplung ausgebildet und daher mittels eines Gehäuses 50 gegenüber der Umgebung abgedichtet. Das Gehäuse 50 weist ein erstes Gehäuseteil 51, auch als motorseitige Nassraumkapsel bezeichnet, ein zweites Gehäuseteil 52, auch als äußere Nassraumkapsel bezeichnet, ein drittes Gehäuseteil 58, auch als getriebeseitige Nassraumkapsel bezeichnet, und ein viertes Gehäuseteil 43 in Form eines Gehäuserings auf. Alle vier Gehäuseteile 51, 52, 58, 43 sind Blechformteile. Das erst Gehäuseteil 51 und das zweite Gehäuseteil 52 sind mittels eines Flanschs 53 unter Zwischenlage einer Gehäusedichtung 54 dicht miteinander verbunden. Der Flansch 53 weist eine Durchgangsöffnung 55 oder mehrere Durchgangsöffnungen 55 auf, mit denen das Gehäuse 50 und damit die Doppelkupplung 1 an einer in Fig. 10 dargestellten Struktur eines Fahrzeugs, beispielsweise an einem Getriebegehäuse 56 eines Traktors, montiert ist. Der Grundplattenträger 16 ist mittels eines Wälzlagers 57 gegenüber dem ersten Gehäuseteil 51 gelagert. Das zweite Gehäuseteil 52 ist mittels einer Dichtung 59, zum Beispiel einer Labyrinthdichtung 59, gegenüber der Kupplungsgrundplatte 15 abgedichtet.

Das dritte Gehäuseteil 58 ist mittels einer Schweißnaht 41 mit der Kupplungsgrundplatte 15 verschweißt und gegenüber dem Fahrkupplungsgehäuse 46 mittels eines O-Dichtrings 42 abgedichtet. Das vierte Gehäuseteil 43 ist ebenfalls mittels einer Schweißnaht 62 mit der Kupplungsgrundplatte 15 verschweißt und gegenüber dem Fahrkupplungsgehäuse 46 mittels eines O-Dichtrings 67 abgedichtet. Anders ausgedrückt ist das Fahrkupplungsgehäuse 46 radial zwischen dem dritten Gehäuseteil 58 und dem vierten Gehäuseteil 43 in axialer Richtung verschiebbar aufgenommen. Zur weiteren Abdichtung des vom Gehäuse 50 umhüllten Innenraums der Doppelkupplung 1 ist das Wälzlager 57 als abgedichtetes Lager ausgebildet. Der Grundplattenträger 16 ist mittels eines Simmerings 60 gegenüber der Zapfwelle 6 abgedichtet. Schließlich ist das dritte Gehäuseteil 58 mittels eines Simmerings 61 gegenüber der Fahrwelle 11 abgedichtet.

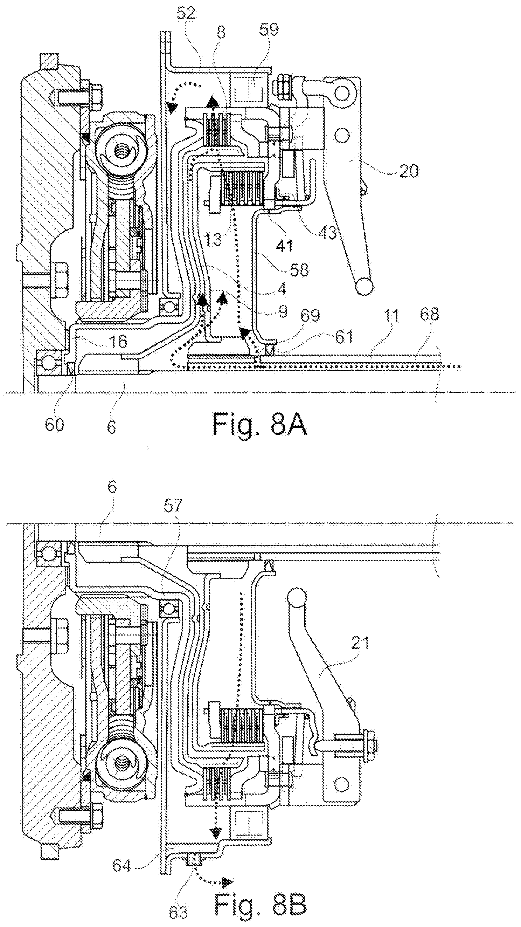

In der dargestellten Ausführungsform erfolgt die Zufuhr von Kühlöl in den Innenraum des Gehäuses 50 durch einen Spalt 68 zwischen der Zapfwelle 6 und der Fahrwelle 11 (siehe z.B. Fig. 8A) und in der Fahrwelle vorgesehenen Ölbohrungen 69. Das zweite Gehäuseteil 52 weist eine Durchführung für eine Ölableitung 63 auf (siehe z.B. in Fig. 8B). Über den Spalt 68 und die Ölbohrungen 69 in das Gehäuse 50 eingeleitetes Kühlöl (von ca. 80° C), beispielsweise aus dem Ölsumpf des Getriebes, wird aufgrund der Rotation der in dem Gehäuse 50 aufgenommenen Kupplungskomponenten, beispielsweise der Zapfwelle 6, der Fahrwelle 11, der Lamellenträger 4 und 9 sowie der damit bewegten Teile, im Innenraum des Gehäuses 50 verteilt, beispielsweise radial nach außen geschleudert. Das Öl benässt dabei die sich im Betrieb der Kupplung erwärmenden Lamellenpakete 8 und 13 und kühlt diese ab. Die Ölableitung 63 ist am radial tiefsten Punkt des Gehäuses 50 vorgesehen, so dass sich in einer Rinne 64 ansammelndes und durch einen Betrieb der Kupplung erwärmtes Öl einfach aus dem Gehäuse 50 abgeführt werden kann, beispielsweise zum Ölsumpf des Getriebes. Der Ölstrom durch die Doppelkupplung ist in den Figuren 8A und 8B dargestellt.

Die Montage der Doppelkupplung 1 am Fahrzeug ist im Prinzip in Fig. 10 dargestellt. Zunächst wird die im Gehäuse 50 aufgenommene und montierte Doppelkupplung 1 am Getriebegehäuse 56 des Fahrzeugs montiert, indem sie über den Flansch 53 mit diesem verschraubt wird. Dabei werden die in Form entsprechender Schnittstellen ausgebildeten Enden der Betätigungshebel 20, 21 mit am Fahrzeug vorgesehenen herkömmlichen Ausrückern verbunden. Nachfolgend wird die Bogenfederdämpfereinheit 24 mit der Doppelkupplung 1 über die z.B. als Keilwellenprofil ausgebildete Verzahnung 23 zusammengeführt.

Die Labyrinthdichtung 59 ist in den Figuren 11 und 12 im Detail gezeigt. Sie weist einen Außenring 70 und einen Innenring 71 auf. Der Außenring 70 ist unter Zwischenlage einer Dichtung 72 im zweiten Gehäuseteil 52 aufgenommen und gegenüber diesem abgedichtet. Der Innenring 71 ist auf der Kupplungsgrundplatte 15 angeordnet und rotiert zusammen mit dieser. Der Außenring 70 weist in seiner oberen Hälfte in radialer Richtung verlaufende Stege 73 auf, die an ihrem inneren Ende zu U-förmigen Fangrinnen 74 ausgebildet sind. In der unteren Hälfte des Außenrings 70 ist dieser zu einer schiefen Ebene 76 abgeflacht. Der Innenring 71 weist umlaufend Stege 75 auf, die zwischen die Stege 73 des Außenrings 70 greifen. Der Außendurchmesser des Innenrings 71 an der Kupplungsinnenseite ist größer als sein Außendurchmesser an der Kupplungsaußenseite. Der Innendurchmesser des Außenrings 70 an der Kupplungsinnenseite ist größer als sein Innendurchmesser an der Kupplungsaußenseite. Auf diese Weise ist zwischen dem Außenring 70 und dem Innenring 71 ein von der Kupplungsinnenseite radial schräg nach innen zur Kupplungsaußenseite verlaufender Spalt ausgebildet. Auf den Innenring gelangtes Kühlöl wird aufgrund dessen Rotation zusammen mit der Kupplungsgrundplatte 15 nach außen in die Zwischenräume zwischen den Stegen 73 des Außenrings 70 geschleudert, läuft an diesen ab in die Fangrinnen 74 und wird über die schiefe Ebene in der unteren Hälfte des Außenrings 70 zurück in das Kupplungsgehäuse 50 geleitet.

### Bezugszeichenliste

- 1: Doppelkupplung
- 2: Fahrantriebskupplung, Fahrwellenkupplung
- 3: Nebenabtriebskupplung, Zapfwellenkupplung
- 4: Lamellenträger
- 5: Zapfwellenverzahnung
- 6: Zapfwelle, Nebenabtriebswelle
- 7: äußerer Randabschnitt
- 8: Lamellenpacket
- 9: Lamellenträger
- 10: Fahrwellenverzahnung
- 11: Fahrwelle, Fahrantriebswelle
- 12: äußerer Randabschnitt
- 13: Lamellenpacket
- 14: Kupplungsgehäuse
- 15: Kupplungsgrundplatte, Zapfkupplungsgehäuse
- 16: Grundplattenträger
- 17: Schweißnaht
- 18: Hebelaufnahme, Hebellagerbock
- 19: Niet
- 20: Betätigungshebel
- 21: Betätigungshebel
- 22: Schwenkachse
- 23: Verzahnung
- 24: Bogenfederdämpfereinheit
- 25: Verschraubung
- 26: Schwungrad
- 27: Verschraubung
- 28: Gleitlagereinheit
- 29: Wälzlager
- 30: Anpressplatte
- 31: äußeres Hebelende
- 32: inneres Hebelende
- 33: Zapfen
- 34: Augenschraube
- 35: Kontermutterverschraubung
- 36: inneres Anpressplattenteil
- 37: äußeres Anpressplattenteil
- 38: Schiebezylinder
- 39: inneres Hebelende
- 40: äußeres Hebelende
- 41: Schweißnaht
- 42: O-Dichtring
- 43: viertes Gehäuseteil
- 44: Durchgangsloch
- 45: Stellschraube
- 46: Fahrkupplungsgehäuse
- 47: Kragen
- 48: Tellerfeder
- 49: Metallring
- 50: Gehäuse, Nassraumgehäuse
- 51: erstes Gehäuseteil
- 52: zweites Gehäuseteil
- 53: Flansch
- 54: Gehäusedichtung
- 55: Durchgangsöffnung
- 56: Getriebegehäuse
- 57: Wälzlager
- 58: drittes Gehäuseteil
- 59: Labyrinthdichtung
- 60: Simmering
- 61: Simmering
- 62: Schweißnaht
- 63: Ölableitung
- 64: Rinne
- 65: Schenkelfeder
- 66: Schenkelfeder
- 67: O-Dichtring
- 68: Spalt
- 69: Ölbohrung
- 70: Außenring
- 71: Innenring
- 72: Dichtung
- 73: Steg
- 74: Fangrinne
- 75: Steg
- 76: schiefe Ebene

## Patentansprüche

1. Doppelkupplung (1), insbesondere Lamellendoppelkupplung, zum Kuppeln eines Kraftfahrzeugmotors mit einer Fahrantriebswelle (11) eines Kraftfahrzeuggetriebes und/oder einer Nebenabtriebswelle (6) eines Nebenabtriebs des Kraftfahrzeuges, mit einer Fahrantriebskupplung (2) zum Kuppeln des Kraftfahrzeugmotors mit der Fahrantriebswelle (11), mit einer Nebenabtriebskupplung (3) zum Kuppeln des Kraftfahrzeugmotors mit der Nebenabtriebswelle (6), wobei die Fahrantriebskupplung (2) und die Nebenabtriebskupplung (3) jeweils mittels einer separaten Hebelmechanik (20, 21, 34) unabhängig voneinander zu betätigen sind, **dadurch gekennzeichnet, dass** die Doppelkupplung (1) ein Nassraumgehäuse (50) aufweist, in dem die Fahrantriebskupplung (2) und die Nebenabtriebskupplung (3) fluiddicht aufgenommen sind, und die jeweilige Hebelmechanik (20, 21, 34) für die Fahrantriebskupplung (2) und die Nebenabtriebskupplung (3) außerhalb des Nassraumgehäuses (50) angeordnet ist.

2. Doppelkupplung (1) nach Anspruch 1, **dadurch gekennzeichnet, dass** die Doppelkupplung (1) ein die Hebelmechaniken (20, 21, 34) tragendes Kupplungsgehäuse (14) aufweist, wobei ein mit der Fahrantriebswelle (11) gekoppelter Fahrkupplungsreibbelag (13) zwischen einer ersten Anpressplatte (47) und dem Kupplungsgehäuse (14) verpressbar angeordnet ist, wobei ein mit der Nebenabtriebswelle (6) gekoppelter Nebenabtriebsreibbelag (8) zwischen einer zweiten Anpressplatte (30) und dem Kupplungsgehäuse (14) verpressbar angeordnet ist, wobei die erste Anpressplatte (47) und die zweite Anpressplatte (30) zum Schließen der Fahrantriebskupplung (2) bzw. der Nebenabtriebskupplung (3) mittels der jeweiligen Hebelmechanik (20, 21, 34) jeweils in Axialrichtung verlagerbar sind.

3. Doppelkupplung (1) nach Anspruch 2, **dadurch gekennzeichnet, dass** das Nassraumgehäuse (50) über eine Dichtung (59) an dem Kupplungsgehäuse (14) anliegt und gegenüber diesem abgedichtet ist.

4. Doppelkupplung (1) nach einem der vorstehenden Ansprüche, **dadurch gekennzeichnet, dass** das Nassraumgehäuse (50) eine erste Nassraumgehäusehälfte mit einem ersten Gehäuseteil (51) und einem zweiten Gehäuseteil (52) aufweist, die fluiddicht miteinander verbunden sind.

5. Doppelkupplung (1) nach Anspruch 2, **dadurch gekennzeichnet, dass** das Nassraumgehäuse (50) eine zweite Nassraumgehäusehälfte (43, 58) aufweist, die fest mit dem Kupplungsgehäuse (14) verbunden ist, und an der Fahrantriebswelle (11) und/oder der Nebenabtriebswelle (6) in dichtender Anlage steht.

6. Doppelkupplung (1) nach einem der vorstehenden Ansprüche, **dadurch gekennzeichnet, dass** das Nassraumgehäuse (50) einen Flansch (53) zur Fixierung am Kraftfahrzeug aufweist.

7. Doppelkupplung (1) nach einem der vorstehenden Ansprüche, **dadurch gekennzeichnet, dass** das Nassraumgehäuse (50) einen Lagersitz ausbildet.

8. Doppelkupplung (1) nach einem der vorstehenden Ansprüche, **dadurch gekennzeichnet, dass** das Nassraumgehäuse (50) einen Kühlmitteleinlass (68, 69) und/oder einen an seiner Unterseite angeordneten Kühlmittelauslass (63) aufweist.

9. Doppelkupplung (1) nach Anspruch 2, **dadurch gekennzeichnet, dass** das Kupplungsgehäuse (14) eine Durchführung aufweist, in der die erste Anpressplatte (30) oder die zweite Anpressplatte (46) oder ein mit dieser verbundenes Übertragungsglied (38) zwischen der Hebelmechanik (20, 21, 34) und der Anpressplatte (30, 46) in Axialrichtung lagepositionierbar aufgenommen ist.

10. Doppelkupplung (1) nach Anspruch 2, **dadurch gekennzeichnet, dass** das Kupplungsgehäuse (14) aus zwei Gehäuseteilen (16, 16) gebildet wird, wobei das erste Gehäuseteil (15) und das zweite Gehäuseteil (16) Blechformteile sind.

## Claims

1. Double clutch (1), in particular multiple disc double clutch, for coupling a motor vehicle engine to a traction drive shaft (11) of a motor vehicle transmission and/or a power take-off shaft (6) of a power take-off of the motor vehicle, having a traction drive clutch (2) for coupling the motor vehicle engine to the traction drive shaft (11), having a power take-off clutch (3) for coupling the motor vehicle engine to the power take-off shaft (6), it being possible for the traction drive clutch (2) and the power take-off clutch (3) to be actuated independently of one another in each case by means of a separate lever mechanism (20, 21, 34), **characterized in that** the double clutch (1) has a wet space housing (50), in which the traction drive clutch (2) and the power take-off clutch (3) are received in a fluid-tight manner, and the respective lever mechanism (20, 21, 34) for the traction drive clutch (2) and the power take-off clutch (3) is arranged outside the wet space housing (50).

2. Double clutch (1) according to Claim 1, **characterized in that** the double clutch (1) has a clutch housing (14) which supports the lever mechanisms (20, 21, 34), a traction clutch friction lining (13) which is coupled to the traction drive shaft (11) being arranged such that it can be pressed between a first pressure plate (47) and the clutch housing (14), a power take-off friction lining (8) which is coupled to the power take-off shaft (6) being arranged such that it can be pressed between a second pressure plate (30) and the clutch housing (14), it being possible for the first pressure plate (47) and the second pressure plate (30) to be moved in each case in the axial direction by means of the respective lever mechanism (20, 21, 34) in order to close the traction drive clutch (2) and the power take-off clutch (3), respectively.

3. Double clutch (1) according to Claim 2, **characterized in that** the wet space housing (50) bears against the clutch housing (14) via a seal (59) and is sealed with respect to the said clutch housing (14).

4. Double clutch (1) according to one of the preceding claims, **characterized in that** the wet space housing (50) has a first wet space housing half with a first housing part (51) and a second housing part (52) which are connected to one another in a fluid-tight manner.

5. Double clutch (1) according to Claim 2, **characterized in that** the wet space housing (50) has a second wet space housing half (43, 58) which is connected fixedly to the clutch housing (14) and is in sealing contact with the traction drive shaft (11) and/or the power take-off shaft (6).

6. Double clutch (1) according to one of the preceding claims, **characterized in that** the wet space housing (50) has a flange (53) for fixing on the motor vehicle.

7. Double clutch (1) according to one of the preceding claims, **characterized in that** the wet space housing (50) configures a bearing seat.

8. Double clutch (1) according to one of the preceding claims, **characterized in that** the wet space housing (50) has a coolant inlet (68, 69) and/or a coolant outlet (63) which is arranged on its underside.

9. Double clutch (1) according to Claim 2, **characterized in that** the clutch housing (14) has a leadthrough, in which the first pressure plate (30) or the second pressure plate (46) or a transmission member (38) which is connected thereto is received such that it can be positioned in the axial direction between the lever mechanism (20, 21, 34) and the pressure plate (30, 46).

10. Double clutch (1) according to Claim 2, **characterized in that** the clutch housing (14) is formed from two housing parts (16, 16), the first housing part (15) and the second housing part (16) being shaped sheet metal parts.

## Revendications

1. Double embrayage (1), en particulier double embrayage à disques, pour l'accouplement d'un moteur de véhicule automobile à un arbre d'entraînement de conduite (11) d'une boîte de vitesses de véhicule automobile et/ou à un arbre de prise de force secondaire (6) d'une prise de force secondaire du véhicule automobile, comprenant un embrayage d'entraînement de conduite (2) pour l'accouplement du moteur de véhicule automobile à l'arbre d'entraînement de conduite (11), un embrayage de prise de force secondaire (3) pour l'accouplement du moteur de véhicule automobile à l'arbre de prise de force secondaire (6), l'embrayage d'entraînement de conduite (2) et l'embrayage de prise de force secondaire (3) pouvant être actionnés indépendamment l'un de l'autre à chaque fois au moyen d'un mécanisme de levier séparé (20, 21, 34), **caractérisé en ce que** le double embrayage (1) présente un boîtier d'espace humide (50) dans lequel sont reçus, de manière étanche aux fluides, l'embrayage d'entraînement de conduite (2) et l'embrayage de prise de force secondaire (3), et le mécanisme de levier respectif (20, 21, 34) pour l'embrayage d'entraînement de conduite (2) et l'embrayage de prise de force secondaire (3) est disposé à l'extérieur du boîtier d'espace humide (50).

2. Double embrayage (1) selon la revendication 1, **caractérisé en ce que** le double embrayage (1) présente un boîtier d'embrayage (14) portant les mécanismes de levier (20, 21, 34), une garniture de friction d'embrayage de conduite (13) accouplée à l'arbre d'entraînement de conduite (11) étant disposée de manière à pouvoir être pressée entre une première plaque de pressage (47) et le boîtier d'embrayage (14), une garniture de friction de prise de force secondaire (8) accouplée à l'arbre de prise de force secondaire (6) étant disposée de manière à pouvoir être pressée entre une deuxième plaque de pressage (30) et le boîtier d'embrayage (14), la première plaque de pressage (47) et la deuxième plaque de pressage (30), pour la fermeture de l'embrayage d'entraînement de conduite (2) ou de l'embrayage de prise de force secondaire (3), pouvant chacune être déplacées dans la direction axiale au moyen du mécanisme de levier respectif (20, 21, 34).

3. Double embrayage (1) selon la revendication 2, **caractérisé en ce que** le boîtier d'espace humide (50) s'applique par le biais d'un joint d'étanchéité (59) contre le boîtier d'embrayage (14) et est étanchéifié par rapport à celui-ci.

4. Double embrayage (1) selon l'une quelconque des revendications précédentes, **caractérisé en ce que** le boîtier d'espace humide (50) présente une première moitié de boîtier d'espace humide avec une première partie de boîtier (51) et une deuxième partie de boîtier (52) qui sont connectées l'une à l'autre de manière étanche aux fluides.

5. Double embrayage (1) selon la revendication 2, **caractérisé en ce que** le boîtier d'espace humide (50) présente une deuxième moitié de boîtier d'espace humide (43, 58) qui est connectée fixement au boîtier d'embrayage (14) et qui est en appui étanche contre l'arbre d'entraînement de conduite (11) et/ou l'arbre de prise de force secondaire (6).

6. Double embrayage (1) selon l'une quelconque des revendications précédentes, **caractérisé en ce que** le boîtier d'espace humide (50) présente une bride (53) pour la fixation au véhicule automobile.

7. Double embrayage (1) selon l'une quelconque des revendications précédentes, **caractérisé en ce que** le boîtier d'espace humide (50) constitue un siège de palier.

8. Double embrayage (1) selon l'une quelconque des revendications précédentes, **caractérisé en ce que** le boîtier d'espace humide (50) présente une entrée de liquide de refroidissement (68, 69), et/ou une sortie de liquide de refroidissement (63) disposée au niveau de son côté inférieur.

9. Double embrayage (1) selon la revendication 2, **caractérisé en ce que** le boîtier d'embrayage (14) présente un passage dans lequel la première plaque de pressage (30) ou la deuxième plaque de pressage (46), ou un organe de transfert (38) entre le mécanisme de levier (20, 21, 34) et la plaque de pressage (30, 46) connecté à celle-ci, sont reçus de manière à pouvoir être positionnés dans la direction axiale.

10. Double embrayage (1) selon la revendication 2, **caractérisé en ce que** le boîtier d'embrayage (14) est formé de deux parties de boîtier (16, 16), la première partie de boîtier (15) et la deuxième partie de boîtier (16) étant des pièces façonnées en tôle.
